(19) Europäisches Patentamt / European Patent Office / Office européen des brevets

(11) **EP 2 946 565 B1**

(12) **EUROPEAN PATENT SPECIFICATION**

(45) Date of publication and mention of the grant of the patent:
**10.04.2019 Bulletin 2019/15**

(21) Application number: **14700628.2**

(22) Date of filing: **14.01.2014**

(51) Int Cl.:
*H04N 21/4725* *(2011.01)*

(86) International application number:
**PCT/EP2014/050593**

(87) International publication number:
**WO 2014/111377 (24.07.2014 Gazette 2014/30)**

(54) **A TRANSMISSION METHOD, A RECEIVING METHOD, A VIDEO APPARATUS AND A DATABASE SYSTEM**

SENDEVERFAHREN, EMPFANGSVERFAHREN, VIDEOVORRICHTUNG UND DATENBANKSYSTEM

PROCÉDÉ DE TRANSMISSION, PROCÉDÉ DE RÉCEPTION, APPAREIL VIDÉO ET SYSTÈME DE BASE DE DONNÉES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.01.2013 EP 13305071**

(43) Date of publication of application:
**25.11.2015 Bulletin 2015/48**

(73) Proprietor: **Thomson Licensing**
**92130 Issy-les-Moulineaux (FR)**

(72) Inventors:
• **SCHMOUKER, Philippe**
  **F-35576 Cesson-Sévigné (FR)**
• **ORLAC, Izabela**
  **F-35576 Cesson-Sévigné (FR)**
• **LANAGAN, James**
  **F-35576 Cesson-Sévigné (FR)**

(74) Representative: **Browaeys, Jean-Philippe et al**
**InterDigital CE Patent Holdings**
**20, rue Rouget de Lisle**
**92130 Issy-les-Moulineaux (FR)**

(56) References cited:
| | |
|---|---|
| WO-A1-2009/129345 | WO-A2-2010/105108 |
| US-A1- 2005 193 425 | US-A1- 2009 216 745 |
| US-A1- 2010 092 152 | US-A1- 2010 218 228 |
| US-A1- 2012 167 145 | US-A1- 2012 227 074 |

EP 2 946 565 B1

## Description

### 1. FIELD OF THE INVENTION

A transmission method in a video apparatus connected to a database system is disclosed. The database system comprises a database of visual entities possibly associated with metadata. A receiving method in the database system is also disclosed. The invention further relates to a corresponding video apparatus and a corresponding database system.

### 2. BACKGROUND OF THE INVENTION

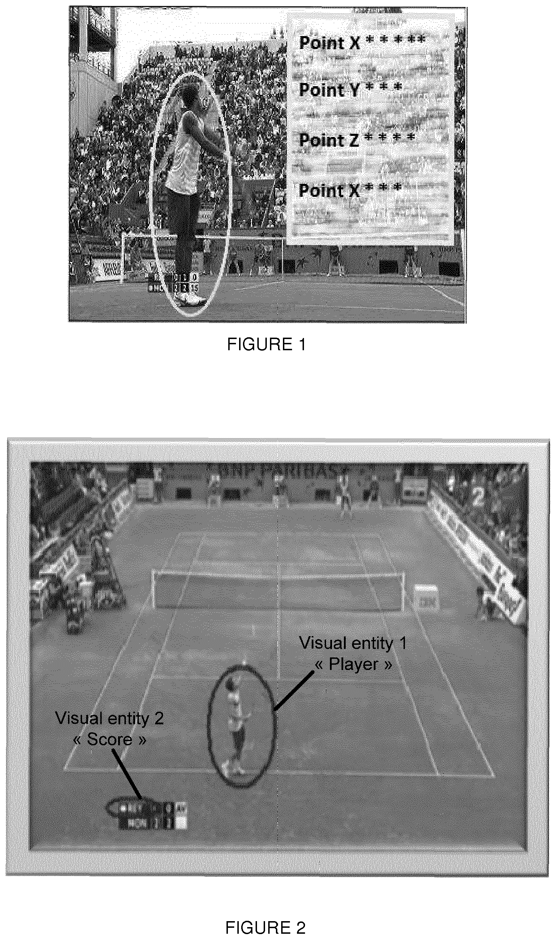

When watching a video, it is known to enhance the video content with additional data known as metadata. These metadata can be digital data as well as textual data that are associated with either video segments (i.e. groups of successive frames) or segments within frames (i.e. surfaces made up of contiguous pixels such as pixel blocks). Usually, metadata are associated with specific visual entities in the video content. Such visual entities in videos are usually made up of segments within frames that can have some semantic meaning and that are appearing on at least a couple of successive frames. As an example depicted on **figure 1,** when watching a tennis match, a user can access information on the scores of a player by just selecting in a picture of the video a visual entity that corresponds to the player. In yet another example, a user can access information on a product in a movie displayed on a screen, e.g. additional information on the sun glasses worn by the actor. To this aim, the user selects the visual entity that corresponds to the sun glasses in a picture of the movie. The visual entities are usually stored with their associated metadata in a database system remotely connected to a video receiver. When the user selects a visual entity on the video receiver side through a touch screen for instance, a request is sent to the database system. In return, the database system sends the metadata associated with the selected entity to the video receiver. Such a system is however not very flexible. As an example, the user when watching the tennis match may select the visual entity representing the score with the name of the player instead of the player itself as depicted on **figure 2.** In this case, the metadata associated with the visual entity "player" is not displayed. Only the metadata associated with the visual entity "score" is displayed.

US 2009/216745 A1 discloses a system for displaying content where a user or different users can select one or more displayed items so that additional associated information is received for each of them. And US 2010/218228 A1 discloses a system which provides combined metadata associated to several selected displayed objects.

### 3. BRIEF SUMMARY OF THE INVENTION

The invention is set out in the appended set of claims.

### 4. BRIEF DESCRIPTION OF THE DRAWINGS

Other features and advantages of the invention will appear with the following description of some of its embodiments, this description being made in connection with the drawings in which:

- Figure 1 is a picture of a tennis match comprising a visual entity "tennis player" associated with metadata displayed with the picture;
- Figure 2 is a picture of a tennis match comprising two visual entities, one is the player and the second one is his score;
- Figure 3 depicts a video system according to an exemplary embodiment of the invention;
- Figure 4 depicts, according to an exemplary embodiment of the invention, a flowchart of a transmission method in a video apparatus connected to a database system of visual entities.
- Figure 5 illustrates the principle of block based graphical feature;
- Figure 6 depicts, according to an exemplary embodiment of the invention, a flowchart of a receiving method in a database system of visual entities associated with metadata;
- Figure 7 illustrates the principle of storage of linked visual entities as double-linked chains, according to an exemplary embodiment of the invention;
- Figure 8 shows a pyramidal structure of a visual entity;
- Figure 9 depicts on the same flowchart, according to a further embodiment of the invention, both the transmission method and the receiving method;
- Figure 10 shows an example where a user associates a first visual entity 'REY' with a second visual entity 'player';
- Figure 11 depicts a live program displayed in PiP mode (Picture in Picture) while a part of the video defined by metadata is displayed on the main part of the screen; and
- Figure 12 depicts a video receiver according to an exemplary embodiment of the invention.

### 5. DETAILED DESCRIPTION OF THE INVENTION

In the figures, the represented boxes are purely functional entities, which do not necessarily correspond to physical separated entities. As will be appreciated by one skilled in the art, aspects of the present principles can be embodied as a system, method or computer readable medium. Accordingly, aspects of the present principles can take the form of an entirely hardware embodiment, an entirely software embodiment (including firmware, resident software, micro-code, and so forth), or an embodiment combining software and hardware_aspects that can all generally be referred to herein as a "circuit," "module", or "system." Furthermore, aspects of the present principles can take the form of a computer readable storage medium. Any combination of one or more computer readable storage medium(s) may be utilized.

The flowchart and/or block diagrams in the figures illustrate the configuration, operation and functionality of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, or blocks may be executed in an alternative order, depending upon the functionality involved. It will also be noted that each block of the block diagrams and/or flowchart illustration, and combinations of the blocks in the block diagrams and/or flowchart illustration, can be implemented by special purpose hardware-based systems that perform the specified functions or acts, or combinations of special purpose hardware and computer instructions. While not explicitly described, the present embodiments may be employed in any combination or subcombination.

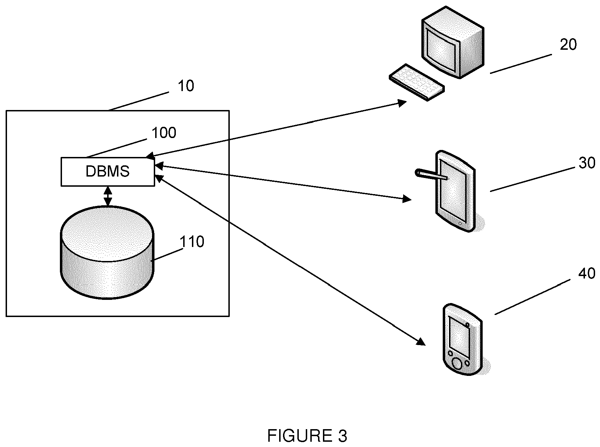

In reference to **figure 3,** a video system according to an exemplary embodiment of the invention is disclosed. The video system comprises a database system 10. The database system 10 comprises a database management system (DBMS) 100 and a database 110. The DBMS 100 is a suite of computer software providing the interface between users and the database. The DBMS 100 is responsible for data maintenance, therefore inserting new data into existing data structures, updating data in existing data structures, deleting data from existing data structures. The DBMS 100 is also responsible for data retrieval upon user request, more precisely for use by application programs. The DBMS 100 further also controls the access to the database 110. The database system 10 is connected to a plurality of video apparatus 20, 30, 40, etc. Visual entities associated with metadata are stored in the database 110. Visual entities are for example visual objects, i.e. image portions, having semantic meaning and appearing on at least a couple of successive pictures. The metadata are for example extracted from video analysis or can be provided by the broadcaster. The associated metadata can be either numerical or textual data. It can be preformatted data (e.g. HTML code or XML representation) that embeds the format of the display, or it can be some picture with Alpha channel to be inserted at some position within the displayed video. According to a variant, the database system 10 is located in one of the video apparatus 20, 30, 40, etc.

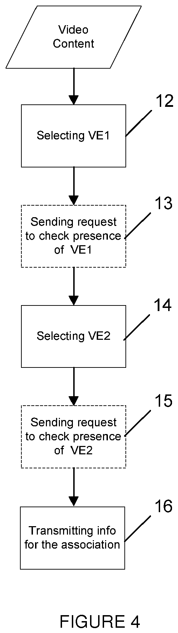

In reference to **figure 4,** a transmission method in a video apparatus connected to a database system of visual entities is disclosed. In figure 4, the represented boxes are purely functional entities, which do not necessarily correspond to physical separated entities. Namely, they could be developed in the form of software, or be implemented in one or several integrated circuits. The methods may be embodied in a computer readable medium and executable by a computer.

In a step 12, a first visual entity VE1 is selected in the video content. Specifically, the video apparatus connected to the database receives a selection of a first visual entity VE1, e.g. made by a user. Indeed, a selection is initiated by a user but received by the video apparatus. The visual entity VE1 is for example selected by a mouse click. More precisely, the user presses down on a mouse button to select the first visual entity VE1. According to a variant, the user directly presses down on a touch screen to select the first visual entity VE1. The first visual entity may also be selected by voice command or gesture command. In a step 14, a second visual entity VE2 is selected in the video content. Specifically, the video apparatus receives a selection of a second visual entity VE2, e.g. made by a user. The second visual entity VE2 is selected in the same way as the first visual entity, i.e. either by a mouse click or by directly tapping on the touch screen, by voice command or gesture command. After clicking on VE1 at step 12, the selection of VE2 may also be made either by dragging a representation of VE1 or the cursor onto VE2 and then releasing pressure or by dragging a representation of VE1 or the cursor onto VE2, then releasing pressure and finally clicking/tapping on VE2 to confirm the selection. In this last case, if the final clicking/tapping to confirm the selection occurs far away, i.e. at a distance above a threshold value, from the point of pressure release then the whole process is cancelled. The second visual entity may also be selected by voice command or gesture command. According to a variant, if the time delay between step 12 and 14 is above a given threshold value, then the whole process is cancelled.

In a step 16, one information item relative to an association of said first visual entity VE1 with said second visual entity VE2 is transmitted to the database system. The information item is for example a simple request to associate in the database both entities.

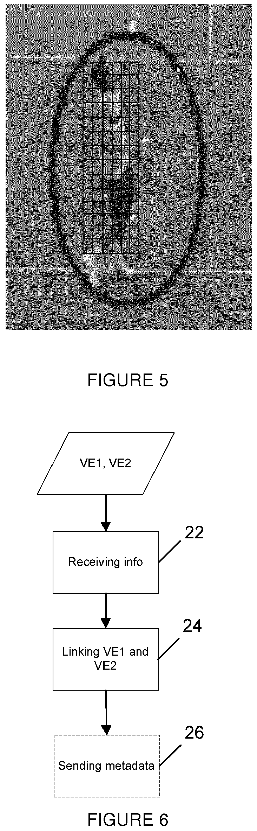

According to an improved embodiment, the transmission method further comprises at a step 13 after selecting the first visual entity, transmitting/sending a first request to the database system to check for the presence of the first visual entity VE1 in the database system. Indeed, the first visual entity is possibly a new visual entity not yet recorded in the database. If not present, VE1 is added to the database with its graphical feature to be later on recognized. In the same way, the method further comprises at a step 15 after selecting the second visual entity, sending a second request to said database system to check for the presence of the second visual entity in the database system. According to a specific embodiment of the invention, sending a request to the database system to check for the presence of a visual entity, either the first or the second visual entity, in the database system comprises sending at least one graphical feature or more generally descriptive feature (e.g. position within frames) determined from the visual entity. As an example depicted on **figure 5,** the graphical feature is a set of color histograms determined by dividing said visual entity into image blocks and computing a color histogram for each of the image block. The color histogram is thus a representation of the distribution of colors in the image block. More precisely, the color space is split into color ranges. For each color range, the number of pixels whose color value falls into the range is computed. Since a color histogram is computed for each image block, a set of color histograms is thus computed for one visual entity. The transmitted information is a list or an array of blocks representations, e.g. color histograms. Each block representation may be a list of pairs <color components values ; pixels count> as described in the following table.

| COLOR (e.g. RVB, or HSV, etc.) | PIXELS # |
|---|---|
| R=0x80 V=0x7A B=0x20 | 15 |
| R=0xA8 V=0xA8 B=0xA8 | 45 |
| ... | ... |

If the second visual entity VE2 is not present in the database, it is a new visual entity VE2 and it is inserted into the database with its graphical feature. To be later recognized as a database entry it has to get a sufficiently discriminative yet generic description. Such a description is for example the set of color histograms.

According to a variant, the steps 12 and 14 are operated first. Then steps 13, 15 and 16 are merged into a single step. More precisely, the VE1 is selected first, then VE2 is selected. Finally, a single request is transmitted/sent to the database for checking for the presence in the database of VE1 and VE2 (adding them if necessary with their graphical features) and for linking both entities. According to another variant, only steps 15 and 16 are merged into a single step, i.e. a single request is transmitted to the database to check for the presence in the database of VE2 (adding it if necessary with their graphical features) and to link both entities.

Later on, when a user selects one visual entity, e.g. VE1, in one of the video apparatus 20, 30, 40, etc, connected to the database system, he receives the metadata associated with the selected visual entity and the metadata associated with any one of the visual entities linked with the selected visual entity in the database system.

In the database 110, metadata, graphical features and links can be stored as three simple maps:

- a first map is mapping metadata over visual entities' identifiers;
- a second map is mapping identifiers of linked entities with a given visual entity identifier; and
- a third map is mapping graphical features over each visual entity identifier.

In reference to **figure 6,** a receiving method in a database system of visual entities associated with metadata, said database system being connected to a video apparatus is disclosed. In figure 5, the represented boxes are purely functional entities, which do not necessarily correspond to physical separated entities. Namely, they could be developed in the form of software, or be implemented in one or several integrated circuits. The methods may be embodied in a computer readable medium and executable by a computer.

At a step 22, an information item (e.g. a request to link two entities) relative to an association of a first visual entity with a second visual entity is received by the database system from said video apparatus.

At a step 24, the first visual entity and the second visual entity are linked upon reception of the information in the database. According to a specific embodiment, linking the first visual entity and the second visual entity comprises associating any metadata of one of said first and second visual entities with the other one of said first and second entities. The link is for example created as list of pairs of visual entity identifiers as in table 1. According to a variant, each pair is duplicated with reversed first and second components in order to ease the search in the database. As an example, the pair (ID_1, ID_2) is also stored as (ID_2, ID_1).

**Table 1**

| | |
|---|---|
| ID_1 | ID_2 |
| ID_1 | ID_5 |
| ID_2 | ID_1 |
| ID_2 | ID_5 |
| ID_3 | ID_4 |
| ID_4 | ID_3 |
| ID_5 | ID_1 |
| ID_5 | ID_2 |

According to a variant, the links are created as a map or dictionary connecting visual entity identifiers together. Such a dictionary is for example defined as a hash map, e.g. { ID_1: [ID_2, ID_5], ID_2: [ID_1, ID_5], ID_3: [ID_4], ID_4: [ID_3], ID_5: [ID_1, ID_2] }.

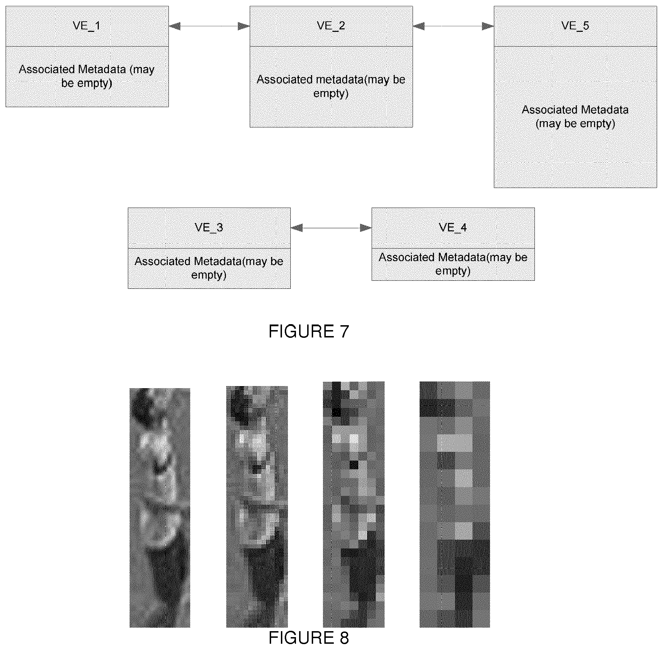

According to yet another variant, single linked chains or double linked chains of visual entities are stored in the database. On **figure 7,** two double linked chains are represented. In a single linked chain ID1 → ID2 and ID2 → ID1 are linked through two entities while in a double linked chain ID1 ⇔ ID2 are linked through a single entity.

According to an improved embodiment, the method comprises receiving from the video apparatus a first request to check for the presence of the first visual entity in the database system, checking the presence of the first visual entity in the database system upon reception of the request and adding the first visual entity with its graphical feature in the database system when not present. In the same way, the method further comprises receiving from the video apparatus a second request to check for the presence of the second visual entity in the database system, checking the presence of the second visual entity in the database system upon reception of the request and adding the second visual entity with its graphical feature in the database system when not present. According to a variant, a single request is received from the video apparatus by the database system to check for the presence of the second visual entity and to further link the two entities. According to yet another variant a single request is received to check for the presence of both visual entities and to further link the two entities.

As an example, receiving a request to check for the presence of a visual entity comprises receiving at least one graphical feature determined from the visual entity. The graphical feature is the representation of the visual entity and is for example constituted of a set of color histograms determined by dividing the visual entity into image blocks and computing a color histogram for each of the image blocks. Another graphical feature is, for example, a set of color regions obtained by color segmentation. Another descriptive feature is the size and position of the visual entity within the frame.

Checking for the presence of a visual entity into the database system comprises comparing the received graphical feature with each graphical feature associated with each visual entity of the database system. The graphical feature associated with each visual entity of the database system is preferably stored in the database with the visual entity and its metadata. Therefore, for checking whether a visual entity selected by the video apparatus is already stored in the database, the DMBS compares the received graphical feature with the graphical features of all the visual entities of the database. If the DMBS finds a visual entity stored in the database whose graphical feature is close in the sense of a certain distance to the graphical feature received, this means that the visual entity is already stored. Otherwise, a new visual entity is added in the database with the received graphical feature.

The distance between two color histograms is for example determined according to the following equation:

$$d_{i,j} = \sum_{\# \, colors} d_{i,j}( \, c_1, c_2)$$

(i,j) are the coordinates of the block whose color histograms are compared. The core of this function is $d_{i,j}$ the distance between colors, for which any well-known distance can be used (L1, L2, Euclidian, ...)

Therefore, each histogram of the visual entity to be checked is compared with a spatially corresponding histogram of a visual entity in the database.

Once a distance between colors histograms is computed for each block, an overall distance is computed between both visual entities as a weighted function of all the blocks distances:

$$d(VE1,VE2) = \sum_{i=0, \ j=0}^{n-1, \ m-1} W_{i,j} \times d_{i,j}$$

with $n$ and $m$ the counts of blocks (lines and columns) describing the object.

If the overall distance is below a threshold value, then the visual entity is thus recognized to be stored in the database.

Advantageously, the weights $W_{i,j}$ are defined such as the more external the blocks have lower weight. Table 2 below shows an example of such weights

| 0,10 | 0,21 | 0,25 | 0,21 | 0,10 |
|------|------|------|------|------|
| 0,29 | 0,44 | 0,50 | 0,44 | 0,29 |
| 0,44 | 0,65 | 0,75 | 0,65 | 0,44 |
| 0,50 | 0,75 | 1,00 | 0,75 | 0,50 |
| 0,44 | 0,65 | 0,75 | 0,65 | 0,44 |
| 0,29 | 0,44 | 0,50 | 0,44 | 0,29 |
| 0,10 | 0,21 | 0,25 | 0,21 | 0,10 |

**Table 2**

According to a variant, the representation of the visual entity is constituted of a pyramidal structure of colors histograms as depicted on **figure 8.** The process disclosed above is applied at any level of the pyramidal description. The rougher the description, the quicker the decision on visual entity's presence in the database is taken. If at a given level of the pyramid, the DBMS does not find a visual entity in the database whose graphical feature is close to the graphical feature received, then the visual entity is considered not to be present in the database and is added with its graphical feature. At any time a finer description level can be used to refine the detection process when a close visual entity is found at a rougher level. The presence of a visual entity in the database system is validated only when the finest level of description is used for processing. According to a variant, the presence of a visual entity in the database system is validated when the distance is below a given threshold value.

Later on, in an optional step 26, the database system possibly transmits both the metadata associated with a selected visual entity and the metadata associated with any one of the visual entities linked with the selected visual entity in the database system. The selection of the visual entity is made in anyone of the video apparatus 20, 30, 40, etc.

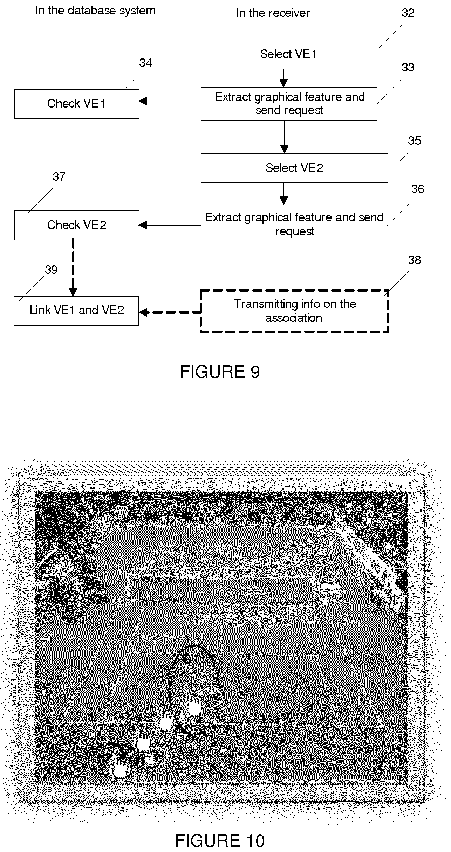

**Figure 9** depicts on the same flowchart both the transmission method and the receiving method according to a further embodiment of the invention. In this figure, some steps thus occur in the video receiver while others occur in the database system.

At a step 32 in the video receiver, a user selects a first visual entity VE1 for example by holding on pressure (with finger or mouse button) over the first visual entity VE1. Specifically, the video receiver receives a selection of a first visual entity VE1, i.e. the one made by the user.

At a step 33 in the video receiver, VE1 graphical features (e.g. colors, shape, gradients, etc.) are extracted from current frame and a first request is sent to the database system.

At a step 34 in the database system, the presence of the visual entity VE1 in the database is checked by comparing the received graphical feature with the graphical features of the visual entities stored in the database. If the visual entity VE1 is not found to be present in the database, then VE1 is added in the database as a new entry with its graphical feature.

At a step 35 in the video receiver, a user selects a second visual entity VE2 for example by clicking on VE2 or by successively dragging VE1 within the video over onto VE2 and releasing pressure. According to a variant, the selection of the second entity VE2 is made by successively dragging VE1 within the video onto VE2, releasing pressure and then clicking on VE2 to confirm the selection. Specifically, the video receiver receives a selection of a first visual entity VE1, i.e. the one made by the user.

At a step 36 in the video receiver, VE2 graphical features (e.g. colors, shape, gradients, etc.) are extracted from current frame and a second request is sent to the database system.

At a step 37 in the database system, the presence of the visual entity VE2 in the database is checked by comparing the received graphical feature with the graphical features of the visual entities stored in the database. If the visual entity VE2 is not found to be present in the database, then it is added in the database as a new entry with its graphical feature.

At a step 38 in the video receiver, one information item relative to an association of the first visual entity VE1 with the second visual entity VE2 is transmitted to the database system. According to a variant, the step 38 is merged with step 36. In this case, at step 36, VE2 graphical features (e.g. colors, shape, gradients, position, etc.) are extracted from the current frame and a second request is transmitted/sent to the database system to check for the presence of the visual entity VE2 in the database and further to link VE1 and VE2. According to yet another variant, steps 33, 36 and 38 are merged into a single step. In this case, VE1 and VE2 graphical features are extracted from current frame and a request is transmitted/sent to the database system to check for the presence of the visual entities VE1 and VE2 in the database and further to link VE1 and VE2.

At a step 39 in the database system, VE1 and VE2 are linked.

Later on, in any video receiver connected to the database system, when a user selects VE1 or VE2 to get metadata, he receives both the metadata associated with the selected visual entity and all the metadata associated with visual entities different from the selected visual entity, but linked with it in the database. As depicted on **figure 10,** upon reception of the metadata associated with the selected visual entity, the user selects one of these metadata, e.g. the best points of the match that the selected player previously won. The part of the video corresponding to the selected metadata is then displayed either in PiP mode or on the main part of the screen while the live video is displayed in PiP mode.

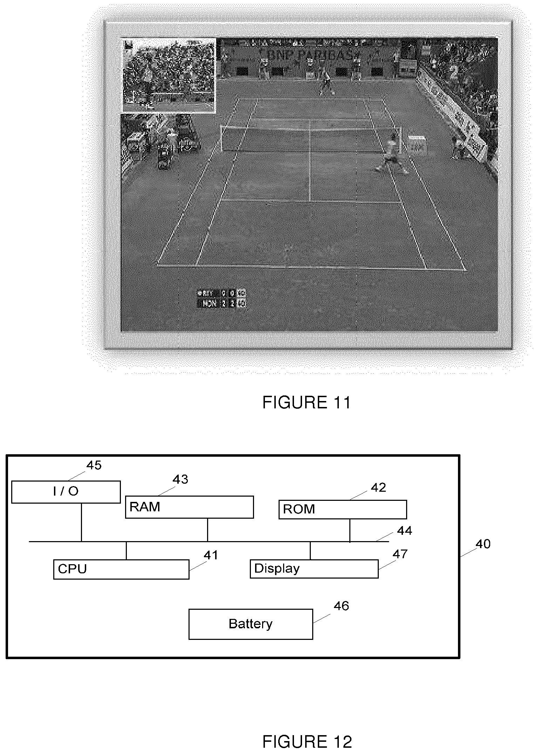

**Figure 11** shows an example where a user associates a first visual entity 'REY' with a second visual entity 'player'. The user clicks on the 'REY' then drags the part of the score named 'REY' to a second visual entity (here the player, labels '1a' to '1d'), then releases the mouse button and clicks on the visual entity to-be-linked (label '2'). 'REY' and the destination visual entity, i.e. the displayed image of the player himself, are then linked in the database. Consequently, metadata associated with 'REY' are then available when the user later selects the destination visual entity and inversely. Any metadata or information previously associated with 'REY' - e.g. the name of the player, here Reynolds, is now also associated with the destination visual entity.

**Figure 12** represents an exemplary architecture of a video apparatus 40. The video apparatus 40 comprises the following elements that are linked together by a data and address bus 44:

- a microprocessor 41 (or CPU), which is, for example, a DSP (or Digital Signal Processor);
- a ROM (or Read Only Memory) 42;
- a RAM (or Random Access Memory) 43;
- an input/output module 45 for reception of video content, metadata and for transmitting requests information on the association of visual entities;
- a battery 46;
- a display 47; and possibly
- a user interface.

Each of these elements of figure 10 is well known by those skilled in the art and won't be disclosed further. In each of mentioned memory, the word « register » used in the specification can correspond to area of small capacity (some bits) or to very large area (e.g. a whole program or large amount of received or decoded data). Algorithms of the transmission method according to an exemplary embodiment of the invention are stored in the ROM 42. When switched on, the CPU 41 uploads the program in the RAM and executes the corresponding instructions. RAM 43 comprises in a register, the program executed by the CPU 41 and uploaded after switch on of the apparatus 40. According to a variant of the invention, the digital part of the apparatus 30 is implemented in pure hardware configuration (e.g. in one or several FPGA, ASIC or VLSI with corresponding memory) or in a configuration using both VLSI and DSP.

The architecture of the video apparatus 20 and 30 is identical to the architecture described above for apparatus 40.

When a first user is associating two visual entities, the database system thus receives information on this association and thus links the two entities, i.e. creates a link between the two entities. As soon as visual entities are linked in the database, any information / metadata associated with one of these entities is immediately associated with the other ones. Consequently, when, later on, a user, i.e. either the first user or another one, selects any one of the two entities, he receives all the metadata associated with both the first visual entity and with the second visual entity. Therefore, the second user when selecting the second entity is not limited to the reception of the metadata associated with this second entity, but also receives the metadata associated with the first visual entity.

A small database of such links is then constructed on the fly and moreover shared between users who act then in a collaborative manner. The database contains visual entities associated with metadata and links between visual entities as created upon user's selection.

This database is available for the user during any interactions with the video document. Furthermore, the database system is advantageously used in a collaborative way, each user being connected to friends or communities, sharing their links and associated information with others. Some policy may be proposed to ensure minimal coherence of the database, e.g. the mostly linked together entities over the community will be shared first.

Finally, this database may be associated to the displayed document and provided with it at any replay time (e.g. VoD, catch-up TV, etc.) One can imagine providing a database version according to the user profile or to some community description. A community is defined based on user profiles and center of interest. As an example, for a football/tennis game, two communities may be defined, e.g. one for each team. The experience for the user is thus enhanced. All the users thus contribute to an overall task and take benefit of others' contributions.

**Claims**

1. A method in a video apparatus connected to a database system of visual entities associated with metadata, wherein said method comprises:

   - receiving (12, 32) a selection of a first visual entity in a video content;
   - sending at least one request to link, in said database system, said first visual entity with a second visual entity in said video content so that any metadata associated with one of said first and second visual entities is further associated with the other one of said first and second entities in said database system, said request being triggered by receiving a selection of said second visual entity;
   - later on, receiving metadata associated to the first and the second visual entity upon transmission of a selection command of the first or the second visual entity.

2. The method according to claim 1, further comprising after receiving the selection of the first visual entity, sending (13, 33) a first request to said database system to check for the presence of the first visual entity in the database system.

3. The method according to any of claims 1 to 2, further comprising after receiving the selection of the second visual entity, sending (15, 36) a second request to said database system to check for the presence of the second visual entity in the database system.

4. The method according to any of claims 2 to 3, wherein sending a request to said database system to check for the presence of the first visual entity in the database system comprises sending at least one graphical feature determined from said first visual entity.

5. The method according to claim 4, wherein said at least one graphical feature is a set of color histograms determined by dividing said first visual entity into small blocks and computing a color histogram for each of said blocks.

6. A method in a database system of visual entities associated with metadata, said database system being connected to a video apparatus, comprising:

   - receiving (22, 34) from said video apparatus, at least one request to link a first selected visual entity in a video content with a second visual entity, said request being triggered by a selection of said second visual entity; and
   - linking (24) in said database system the first visual entity and the second visual entity upon reception of said request so that any metadata associated with one of said first and second visual entities is further associated with the other one of said first and second entities;

- later on, transmitting metadata associated to the first and the second visual entity upon reception of a selection command of the first or the second visual entity.

**7.** The method according to claim 6, further comprising receiving from the video apparatus a request to check for the presence of the first visual entity in the database system, checking (34) the presence of the first visual entity in said database system upon reception of said request and adding said first visual entity in said database system when not present.

**8.** The method according to any of claims 6 to 7, further comprising receiving from the video apparatus a request to check for the presence of the second visual entity in the database system, checking (37) the presence of the second visual entity in said database system upon reception of said request and adding said second visual entity in said database system when not present.

**9.** The method according to claim 7 or 8, wherein receiving a request to check for the presence of a visual entity comprises receiving at least one graphical feature determined from said visual entity.

**10.** The method according to claim 9, wherein said at least one graphical feature is a set of color histograms determined by dividing said first visual entity into small blocks and computing a color histogram for each of said blocks.

**11.** The method according to claim 9 or 10, wherein checking the presence of said first visual entity into said database system comprises comparing said received at least one graphical feature with each graphical feature associated with each visual entity of said database system.

**12.** A video apparatus (40) connected to a database system of visual entities associated with metadata wherein said video apparatus comprises:

- means for receiving a selection (41, 42, 43) of a first visual entity in said video content;
- means for receiving a selection (41, 42, 43) of a second visual entity in said video content; and
- means for sending at least one request to link, in said database system, said first visual entity with said second visual entity so that any metadata associated with one of said first and second visual entities is further associated with the other one of said first and second entities in said database system, said request being triggered by receiving the selection of said second visual entity;

- means for, later on, receiving metadata associated to the first and the second visual entity upon transmission of a selection command of the firsrt or the second visual entity.

**13.** A database system (10) of visual entities associated with metadata, said database system being connected to a video apparatus, wherein said database system comprises:

- means for receiving (100), from said video apparatus, at least one request to link a first selected visual entity in a video content with a second visual entity, said request being triggered by a selection of said second visual entity; and
- means for linking (110) in said database system the first visual entity and the second visual entity upon reception of said request so that any metadata associated with one of said first and second visual entities is further associated with the other one of said first and second entities in said database;
- means for transmitting metadata associated to the first and the second visual entity upon reception of a selection command of the first or the second visual entity.

**Patentansprüche**

**1.** Verfahren in einer Videovorrichtung, die mit einem Datenbanksystem visueller Entitäten, denen Metadaten zugeordnet sind, verbunden ist, wobei das Verfahren umfasst:

- Empfangen (12, 32) einer Auswahl einer ersten visuellen Entität in einem Videoinhalt;
- Senden mindestens einer Anforderung, die erste visuelle Entität in dem Datenbanksystem mit einer zweiten visuellen Entität in dem Videoinhalt zu verknüpfen, so dass irgendwelche Metadaten, die der ersten oder der zweiten visuellen Entität zugeordnet sind, ferner der anderen der ersten und der zweiten Entität in dem Datenbanksystem zugeordnet werden, wobei die Anforderung durch den Empfang einer Auswahl der zweiten visuellen Entität ausgelöst wird;
- später, nach Sendung eines Auswahlbefehls der ersten oder der zweiten visuellen Entität, Empfangen von Metadaten, die der ersten und der zweiten visuellen Entität zugeordnet sind.

**2.** Verfahren nach Anspruch 1, das ferner nach dem Empfangen der Auswahl der ersten visuellen Entität das Senden (13, 33) einer ersten Anforderung zum Prüfen auf die Anwesenheit der ersten visuellen Entität in dem Datenbanksystem an das Datenbanksystem umfasst.

3. Verfahren nach einem der Ansprüche 1 bis 2, das ferner nach dem Empfangen der Auswahl der zweiten visuellen Entität das Senden (15, 36) einer zweiten Anforderung, auf die Anwesenheit der zweiten visuellen Entität in dem Datenbanksystem zu prüfen, an das Datenbanksystem umfasst.

4. Verfahren nach einem der Ansprüche 2 bis 3, wobei das Senden einer Anforderung an das Datenbanksystem, auf die Anwesenheit der ersten visuellen Entität in dem Datenbanksystem zu prüfen, das Senden mindestens eines aus der ersten visuellen Entität bestimmten grafischen Merkmals umfasst.

5. Verfahren nach Anspruch 4, wobei das mindestens eine grafische Merkmal eine Menge von Farbhistogrammen ist, die durch Teilen der ersten visuellen Entität in kleine Blöcke und durch Berechnen eines Farbhistogramms für jeden der Blöcke bestimmt werden.

6. Verfahren in einem Datenbanksystem visueller Entitäten, denen Metadaten zugeordnet sind, wobei das Datenbanksystem mit einer Videovorrichtung verbunden ist, wobei das Verfahren umfasst:

   - Empfangen (22, 34) mindestens einer Anforderung zum Verknüpfen einer ersten ausgewählten visuellen Entität in einem Videoinhalt mit einer zweiten visuellen Entität, von der Videovorrichtung, wobei die Anforderung durch eine Auswahl der zweiten visuellen Entität ausgelöst wird; und
   - Verknüpfen (24) der ersten visuellen Entität und der zweiten visuellen Entität in dem Datenbanksystem nach Empfang der Anforderung, so dass irgendwelche Metadaten, die der ersten oder der zweiten visuellen Entität zugeordnet sind, ferner der anderen der ersten und der zweiten Entität zugeordnet werden;
   - später, nach Empfang eines Auswahlbefehls der ersten oder der zweiten Entität, Senden von Metadaten, die der ersten und der zweiten visuellen Entität zugeordnet sind.

7. Verfahren nach Anspruch 6, das ferner das Empfangen einer Anforderung zum Prüfen auf die Anwesenheit der ersten visuellen Entität in dem Datenbanksystem von der Videovorrichtung, das Prüfen (34) der Anwesenheit der ersten visuellen Entität in dem Datenbanksystem nach Empfang der Anforderung und das Hinzufügen der ersten visuellen Entität in dem Datenbanksystem, wenn sie nicht vorhanden ist, umfasst.

8. Verfahren nach einem der Ansprüche 6 bis 7, das ferner das Empfangen einer Anforderung zum Prüfen auf die Anwesenheit der zweiten visuellen Entität in dem Datenbanksystem von der Videovorrichtung, das Prüfen (37) der Anwesenheit der zweiten visuellen Entität in dem Datenbanksystem nach Empfang der Anforderung und das Hinzufügen der zweiten visuellen Entität in dem Datenbanksystem, wenn sie nicht vorhanden ist, umfasst.

9. Verfahren nach Anspruch 7 oder 8, wobei das Empfangen einer Anforderung, auf die Anwesenheit einer visuellen Entität zu prüfen, das Empfangen mindestens eines aus der visuellen Entität bestimmten grafischen Merkmals umfasst.

10. Verfahren nach Anspruch 9, wobei das mindestens eine grafische Merkmal eine Menge von Farbhistogrammen, die durch Teilen der ersten viusuellen Entität in kleine Blöcke und durch Berechnen eines Farbhistogramms für jeden der Blöcke bestimmt werden, ist.

11. Verfahren nach Anspruch 9 oder 10, wobei das Prüfen der Anwesenheit der ersten visuellen Entität in dem Datenbanksystem das Vergleichen des empfangenen mindestens einen grafischen Merkmals mit jedem grafischen Merkmal, das jeder visuellen Entität des Datenbanksystems zugeordnet ist, umfasst.

12. Videovorrichtung (40), die mit einem Datenbanksystem visueller Entitäten, denen Metadaten zugeordnet sind, verbunden ist, wobei die Videovorrichtung umfasst:

   - ein Mittel zum Empfangen einer Auswahl (41, 42, 43) einer ersten visuellen Entität in dem Videoinhalt;
   - ein Mittel zum Empfangen einer Auswahl (41, 42, 43) einer zweiten visuellen Entität in dem Videoinhalt; und
   - ein Mittel zum Senden mindestens einer Anforderung, die erste visuelle Entität in dem Datenbanksystem mit der zweiten visuellen Entität zu verknüpfen, so dass irgendwelche Metadaten, die der ersten oder der zweiten visuellen Entität zugeordnet sind, ferner der anderen der ersten und der zweiten Entität in dem Datenbanksystem zugeordnet werden, wobei die Anforderung durch den Empfang der Auswahl der zweiten visuellen Entität ausgelöst wird;
   - ein Mittel, um später, nach Sendung eines Auswahlbefehls der ersten oder der zweiten visuellen Entität, Metadaten zu empfangen, die der ersten und der zweiten visuellen Entität zugeordnet sind.

13. Datenbanksystem (10) visueller Entitäten, denen Metadaten zugeordnet sind, wobei das Datenbanksystem mit einer Videovorrichtung verbunden ist, wobei das Datenbanksystem umfasst:

   - ein Mittel zum Empfangen (100) mindestens einer Anforderung zum Verknüpfen einer ersten ausgewählten visuellen Entität in einem Videoinhalt mit einer zweiten visuellen Entität von der Videovorrichtung, wobei die Anforderung durch eine Auswahl der zweiten visuellen Entität ausgelöst wird; und
   - ein Mittel zum Verknüpfen (110) der ersten visuellen Entität und der zweiten visuellen Entität in dem Datenbanksystem nach Empfang der Anforderung, so dass irgendwelche Metadaten, die der ersten oder der zweiten visuellen Entität zugeordnet sind, ferner der anderen der ersten und der zweiten Entität in der Datenbank zugeordnet werden;
   - ein Mittel zum Senden von Metadaten, die der ersten und der zweiten visuellen Entität zugeordnet sind, nach Empfang eines Auswahlbefehls der ersten oder der zweiten visuellen Entität.

**Revendications**

1. Procédé dans un appareil vidéo connecté à un système de base de données d'entités visuelles associées à des métadonnées, dans lequel ledit procédé comprend :

   - la réception (12, 32) d'une sélection d'une première entité visuelle dans un contenu vidéo ;
   - l'envoi d'au moins une demande pour lier, dans ledit système de base de données, ladite première entité visuelle à une deuxième entité visuelle dans ledit contenu vidéo de sorte que toute métadonnée associée à l'une desdites première et deuxième entités visuelles soit en outre associée à l'autre desdites première et deuxième entités visuelles dans ledit système de base de données, ladite demande étant déclenchée par la réception d'une sélection de ladite deuxième entité visuelle ;
   - ultérieurement, la réception de métadonnées associées aux première et deuxième entités visuelles lors de la transmission d'une commande de sélection de la première ou de la deuxième entité visuelle.

2. Procédé selon la revendication 1, comprenant en outre après réception de la sélection de la première entité visuelle, l'envoi (13, 33) d'une première demande audit système de base de données pour vérifier la présence de la première entité visuelle dans le système de base de données.

3. Procédé selon l'une quelconque des revendications 1 à 2, comprenant en outre après réception de la sélection de la deuxième entité visuelle, l'envoi (15, 36) d'une deuxième demande audit système de base de données pour vérifier la présence de la deuxième entité visuelle dans le système de base de données.

4. Procédé selon l'une quelconque des revendications 2 à 3, dans lequel l'envoi d'une demande audit système de base de données pour vérifier la présence de la première entité visuelle dans le système de base de données comprend l'envoi d'au moins une caractéristique graphique déterminée à partir de ladite première entité visuelle.

5. Procédé selon la revendication 4, dans lequel ladite au moins une caractéristique graphique est un ensemble d'histogrammes de couleur déterminés par la division de ladite première entité visuelle en petits blocs et le traitement d'un histogramme de couleur pour chacun desdits blocs.

6. Procédé dans un système de base de données d'entités visuelles associées à des métadonnées, ledit système de base de données étant connecté à un appareil vidéo, comprenant :

   - la réception (22, 34) à partir dudit appareil vidéo, d'au moins une demande pour lier une première entité visuelle sélectionnée dans un contenu vidéo à une deuxième entité visuelle, ladite demande étant déclenchée par une sélection de ladite deuxième entité visuelle ; et
   - la liaison (24) dans ledit système de base de données de la première entité visuelle à la deuxième entité visuelle à la réception de ladite demande de sorte que toute métadonnée associée à l'une desdites première et deuxième entités visuelles soit en outre associée à l'autre desdites première et deuxième entités visuelles ;
   - ultérieurement, la transmission de métadonnées associées aux première et deuxième entités visuelles à la réception d'une commande de sélection de la première entité visuelle ou de la deuxième entité visuelle.

7. Procédé selon la revendication 6, comprenant en outre la réception d'une demande provenant de l'appareil vidéo pour vérifier la présence de la première entité visuelle dans le système de base de données, la vérification (34) de la présence de la première entité visuelle dans ledit système de base de données à la réception de ladite demande et l'ajout de ladite première entité visuelle audit système de base de données si elle n'est pas présente.

8. Procédé selon l'une quelconque des revendications 6 à 7, comprenant en outre la réception d'une demande provenant de l'appareil vidéo pour vérifier la présence de la deuxième entité visuelle dans le système de base de données, la vérification (37) de la présence de la deuxième entité visuelle dans ledit système de base de données à la réception de ladite demande et l'ajout de ladite deuxième entité visuelle au système de base de données si elle n'est pas présente.

9. Procédé selon la revendication 7 ou 8, dans lequel la réception d'une demande pour vérifier la présence d'une entité visuelle comprend la réception d'au moins une caractéristique graphique déterminée à partir de ladite entité visuelle.

10. Procédé selon la revendication 9, dans lequel ladite au moins une caractéristique graphique est un ensemble d'histogrammes de couleur déterminés par la division de ladite première entité visuelle en petits blocs et le traitement d'un histogramme de couleur pour chacun desdits blocs.

11. Procédé selon la revendication 9 ou 10, dans lequel la vérification de la présence de ladite première entité visuelle dans ledit système de base de données comprend la comparaison de ladite au moins une caractéristique graphique reçue avec chaque caractéristique graphique associée à chaque entité visuelle dudit système de base de données.

12. Appareil vidéo (40) connecté à un système de base de données d'entités visuelles associées à des métadonnées, ledit appareil vidéo comprenant :

    - un moyen pour recevoir une sélection (41, 42, 43) d'une première entité visuelle dans ledit contenu vidéo ;
    - un moyen pour recevoir une sélection (41, 42, 43) d'une deuxième entité visuelle dans ledit contenu vidéo ; et
    - un moyen pour envoyer au moins une demande pour lier, dans ledit système de base de données, ladite première entité visuelle à ladite deuxième entité visuelle de sorte que toute métadonnée associée à l'une desdites première et deuxième entités visuelles soit en outre associée à l'autre desdites première et deuxième entités visuelles dans ledit système de base de données, ladite demande étant déclenchée par la réception de la sélection de ladite deuxième entité visuelle ;
    - un moyen pour, ultérieurement, recevoir des métadonnées associées aux première et deuxième entités visuelles lors de la transmission d'une commande de sélection de la première entité visuelle ou de la deuxième entité visuelle.

13. Système de base de données (10) d'entités visuelles associées à des métadonnées, ledit système étant connecté à un appareil vidéo, ledit système de base de données comprenant :

    - un moyen pour recevoir (100), en provenance dudit appareil vidéo, au moins une demande pour lier une première entité visuelle sélectionnée dans un contenu vidéo à une deuxième entité visuelle, ladite demande étant déclenchée par une sélection de ladite deuxième entité visuelle ; et
    - un moyen pour lier (110) dans ledit système de base de données la première entité visuelle et la deuxième entité visuelle à la réception de ladite demande de sorte que toute métadonnée associée à l'une desdites première et deuxième entités visuelles soit en outre associée à l'autre desdites première et deuxième entités visuelles dans ladite base de données ;
    - un moyen pour transmettre les métadonnées associées aux première et deuxième entités visuelles à la réception d'une commande de sélection de la première ou de la deuxième entité visuelle.

FIGURE 1

FIGURE 2

FIGURE 3

FIGURE 4

FIGURE 5

FIGURE 6

| VE_1 | VE_2 | VE_5 |
|---|---|---|
| Associated Metadata (may be empty) | Associated metadata(may be empty) | Associated Metadata (may be empty) |

| VE_3 | VE_4 |
|---|---|
| Associated Metadata(may be empty) | Associated Metadata(may be empty) |

FIGURE 7

FIGURE 8

In the database system | In the receiver | 32

Select VE1

34

Check VE1 ← Extract graphical feature and send request | 33

Select VE2 | 35

37

Check VE2 ← Extract graphical feature and send request | 36

39

Link VE1 and VE2 ← Transmitting info on the association | 38

FIGURE 9

FIGURE 10

FIGURE 11

FIGURE 12

**EP 2 946 565 B1**

## REFERENCES CITED IN THE DESCRIPTION

**Patent documents cited in the description**

- US 2009216745 A1

- US 2010218228 A1